# EUROPÄISCHE PATENTANMELDUNG

(11) **EP 4 039 563 A1**
(43) Veröffentlichungstag der Anmeldung: **10.08.2022**
(21) Anmeldenummer: 21212665.0
(22) Anmeldetag: 07.12.2021
(51) Int. Cl.: B62D 5/04, F16H 7/02

(54) **LENKANTRIEB FÜR EIN LENKSYSTEM EINES KRAFTFAHRZEUGS, VERFAHREN ZUM BETRIEB EINES LENKANTRIEBS, LENKSYSTEM FÜR EIN KRAFTFAHRZEUG UND VERFAHREN ZUM BETRIEB EINES LENKSYSTEMS**

(71) Anmelder: thyssenkrupp Presta Aktiengesellschaft, 9492 Eschen (LI); thyssenkrupp AG, 45143 Essen (DE)
(72) Erfinder: Raither, Wolfram, 9475 Sevelen (CH); Schmidt, Uwe, 9243 Jonschwil (CH); Silva Lopez, Iago, 9470 Buchs (CH)
(74) Vertreter: thyssenkrupp Intellectual Property GmbH

(57) **Zusammenfassung**

Die vorliegende Erfindung betrifft einen Lenkantrieb (2) für ein Lenksystem (1) eines Kraftfahrzeugs, welcher einen über ein Riemengetriebe (3) mit einem Aktuatorelement (22) wirkverbundenen elektrischen Motor (4) aufweist, wobei das Riemengetriebe (3) mindestens einen um ein Antriebsrad (31) und ein Abtriebsrad (32) umlaufenden Riemen (33, 34) aufweist. Um eine höhere Betriebssicherheit zu ermöglichen, schlägt die Erfindung vor, dass eine Überwachungseinrichtung (6, 5) zur Erfassung von Betriebsparametern des Riemengetriebes (3) vorgesehen ist.

## Beschreibung

### Stand der Technik

Die Erfindung betrifft einen Lenkantrieb für ein Lenksystem eines Kraftfahrzeugs, welcher einen über ein Riemengetriebe mit einem Aktuatorelement wirkverbundenen elektrischen Motor aufweist, wobei das Riemengetriebe mindestens einen um ein Antriebsrad und ein Abtriebsrad umlaufenden Riemen aufweist. Weiterhin sind ein Verfahren zum Betrieb eines Lenkantriebs, ein Lenksystem für ein Kraftfahrzeug und ein Verfahren zum Betrieb eines Lenksystems Gegenstand der Erfindung.

Bei einem elektromechanischen Lenksystem ist mindestens ein elektrischer Lenkantrieb zur Bereitstellung einer motorischen Stellkraft vorgesehen, die als Lenkkraft zur Erzeugung eines Lenkeinschlags auf lenkbare Räder ausgeübt wird.

Ein Lenkantrieb weist einen elektrischen Motor auf, der abhängig von Lenkbefehlen - beispielsweise durch manuelle Lenkeingaben oder automatisiert bereitgestellte Steuersignale - angesteuert wird. Das Motormoment wird über ein Getriebe zur Verstellung der lenkbaren Räder umgesetzt.

Bei Steer-by-Wire-Lenksystemen für Kraftfahrzeuge können manuelle Lenkbefehle in eine elektronische Lenkeingabeeinheit eigegeben werden, in der sie in elektrische Steuersignale zur Ansteuerung des Lenkantriebs umgesetzt werden. Dabei ist keine mechanische Verbindung zwischen der Lenkeingabeeinheit und den lenkbaren Rädern vorhanden. Zur Realisierung eines autonomen Fahrbetriebs kann die Ansteuerung ohne manuellen Eingriff durch automatisiert bereitgestellte Steuersignale erfolgen, wobei die gesamte für einen Lenkeinschlag der Räder erforderliche Stellkraft durch den Lenkantrieb zur Verfügung gestellt wird.

Zur Übertragung des Motormoments ist im Stand der Technik beispielsweise aus der DE 103 10 505 A1 ein Lenkantrieb mit einem Lenkgetriebe bekannt, bei dem ein Riementrieb zwischen dem Motor und einem mit einem lenkbaren Rad wirkverbundenen Aktuatorelement eingegliedert ist, um einen Spindeltrieb anzutreiben. Dabei ist ein kleineres Riemenrad als Antriebsrad auf der Motorwelle angebracht, welches über einen umlaufenden Riemen mit einem größeren Abtriebsrad antriebsmäßig gekuppelt ist, welches mit einer axial abgestützten Spindelmutter gelagert ist. Eine durch Drehung der Spindelmutter axial linear bewegbare Gewindespindel dient als Aktuatorelement.

Ein Vorteil eines Riementriebs ist die hohe Laufruhe und das relativ geringe Gewicht. In dem vorgenannten Lenkgetriebe kann darüber hinaus durch die Riemenanordnung eine Betriebssicherheit realisiert werden, welche für den darin vorgeschlagenen Einsatz des Lenkantriebs als Hilfskraftantrieb zur Unterstützung eines mechanisch übertragenen manuellen Lenkmoments ausreichend ist. Bei einer Störung oder einem Ausfall des Riementriebs kann das Fahrzeug weiterhin manuell rein mechanisch gelenkt werden. Dagegen kann in einem Steer-by-Wire-Lenksystem oder im autonomen Fahrbetrieb eine derartige Funktionsbeeinträchtigung des Riementriebs zu einer schweren Störung oder einem Ausfall der Lenkung führen, was ein potentiell hohes Sicherheitsrisiko bedeutet.

Angesichts der vorangehend erläuterten Problematik ist es eine Aufgabe der vorliegenden Erfindung, bei einem riemengetriebenen Lenkantrieb eine höhere Betriebssicherheit zu ermöglichen.

### Darstellung der Erfindung

Diese Aufgabe wird erfindungsgemäß gelöst durch das Lenksystem mit den Merkmalen des Anspruchs 1, das Verfahren zum Betrieb eines Lenkantriebs gemäß Anspruch 12, das Lenksystem gemäß Anspruch 13 und das Verfahren zum Betrieb eines Lenksystems gemäß Anspruch 15. Vorteilhafte Weiterbildungen ergeben sich aus den Unteransprüchen.

Bei einem Lenkantrieb für ein Lenksystem eines Kraftfahrzeugs, welcher einen über ein Riemengetriebe mit einem Aktuatorelement wirkverbundenen elektrischen Motor aufweist, wobei das Riemengetriebe mindestens einen um ein Antriebsrad und ein Abtriebsrad umlaufenden Riemen aufweist, ist erfindungsgemäß vorgesehen, dass eine Überwachungseinrichtung zur Erfassung von Betriebsparametern des Riemengetriebes vorgesehen ist.

Im Folgenden werden Antriebs- und Abtriebsrad zusammen als Riemenräder oder Riemenscheiben bezeichnet.

Das Aktuatorelement ist von dem Motor antreibbar und zur Übertragung einer Lenkbewegung direkt oder mittelbar mit mindestens einem lenkbaren Rad verbunden, und kann beispielsweise über eine Spurstange an einen Achsschenkel angelenkt sein.

Die erfindungsgemäße Überwachungseinrichtung ist ausgebildet zur Messung mindestens eines Betriebsparameters, wobei ein oder mehrere messtechnisch erfasste Betriebsparameterwerte Rückschlüsse auf den aktuellen Funktionszustand bzw. die Funktionsbereitschaft des Riementriebs zulassen. Insbesondere können solche physikalischen Messgrößen erfasst werden, die mit dem Zustand mindestens eines Riemens korreliert sind.

Durch die Überwachungseinrichtung können im Betrieb kontinuierlich oder diskret Betriebsparameterwerte gemessen werden. Diese Betriebsparametermesswerte können bezüglich eventueller Änderungen oder Abweichungen überwacht werden, welche auf eine Degradation von Funktionselementen hinweisen können, so dass insbesondere kritische Betriebszustände durch Funktionsbeeinträchtigungen oder Störungen des Riementriebs detektiert werden können. Ein wesentlicher Vorteil ist dabei, dass durch die Überwachungseinrichtung während des Betriebs durchgehend tatsächliche Ist-Betriebsparameterwerte zur Verfügung gestellt werden. Diese können - vorzugsweise automatisiert - analysiert und ausgewertet werden, wodurch potentiell kritische Betriebszustände zuverlässig und schnell erkannt und effektive Sicherheitsmaßnahmen eingeleitet werden können. Dadurch kann die Lenkbarkeit des Fahrzeugs erhalten bleiben, oder beim Risiko eines Lenkungsausfalls Notfallmaßnahmen eingeleitet werden, vorzugsweise gemäß einem automatisiert ablaufenden Notfallprogramm, welches beispielsweise die Abgabe eines Warnsignals, und beispielsweise eine kontrollierte Abbremsung des Fahrzeugs vorsehen kann. In jedem Fall kann durch die Überwachungseinrichtung die Betriebssicherheit des Fahrzeugs und damit die Insassensicherheit erhöht werden. Dies ist ein wesentlicher Vorteil für Steer-by-Wire-Lenkungen von Kraftfahrzeugen, und insbesondere auch zur Realisierung eines sicheren autonomen Fahrbetriebs.

Bevorzugt kann dieÜberwachungseinrichtung eine elektronische Schaltung aufweisen. Die elektronische Schaltung kann insbesondere ausgebildet sein, um elektrische Betriebsparametermesswerte als Eingangswerte aufzunehmen, diese automatisiert elektronisch zu analysieren und zu verarbeiten, und als elektrische Ausgangwerte auszugeben, die Informationen zum Betriebszustand des Riementriebs enthalten. Vorzugsweise kann die Überwachungseinrichtung über eine geeignete Schnittstelle, wie beispielsweise ein CAN-Bussystem oder dergleichen, an weitere Steuereirichtungen angebunden sein, bevorzugt mit dem elektronischen Kommunikationsnetz des Fahrzeugs. Daran ist vorteilhaft, dass sicherheitsrelevante Informationen unmittelbar integrierte Sicherheitsroutinen des Fahrzeugs ansprechen können.

Vorzugsweise ist vorgesehen, dass die Überwachungseinrichtung eine Vergleichseinheit aufweist, die ausgebildet ist zum Vergleich mindestens eines erfassten Betriebsparameters mit einem vorgegebenen Referenzwert. Falls ein aktuell gemessener Betriebsparameterwert über ein vorbestimmtes Maß von einem vorgegebenen Referenzwert abweicht, oder mit anderen Worten außerhalb eines vorgegebenen Referenzbereichs liegt, kann dies als Hinweis auf eine bereits eingetretene oder mit erhöhter Wahrscheinlichkeit eintretende Störung gewertet werden, und von der Überwachungseinrichtung angezeigt werden, beispielsweise durch Ausgabe eines Warnsignals und/oder eines Steuersignals. Vorteilhaft ist dabei, dass potentielle Störungen oder Schäden des Riementriebs größtenteils im Vorfeld erkannt und beseitigt werden können, oder - falls eine Störung nicht vorhersehbar war - unverzüglich geeignete Sicherheits- und Notfallmaßnahmeneingeleitet werden können.

Es ist vorteilhaft, dass die Überwachungseinrichtung eine Speichereinheit aufweist. In dieser Speichereinheit können beispielsweise Referenzwerte gespeichert sein, die beispielsweise maximal zulässige Verschleißgrenzen definieren. Zusätzlich oder alternativ kann vorgesehen sein, dass von der Überwachungseinrichtung erfasste Betriebsparametermesswerte in einer Speichereinheit abgelegt werden. Dadurch ist es möglich, anhand eines zeitlichen Verlaufs über die Betriebsdauer mögliche zukünftige Fehlerquellen zu erkennen, beispielsweise durch übermäßigen Verschleiß, extreme Betriebsbedingungen oder dergleichen, und anhand dessen präventiv Sicherheitsmaßnehmen einzuleiten, noch bevor kritische Betriebsparameterwerte erreicht werden. Dadurch kann die Sicherheit weiter erhöht werden.

Bevorzugt ist vorgesehen, dass die Überwachungseinrichtung ein elektrisches Sensorelement aufweist. Das Sensorelement ermöglicht die Messung von physikalischen Messgrößen die mit Betriebsparametern des Riemengetriebes korreliert sind, und die im Folgenden näher erläutert werden. Ein gemessener Betriebsparameterwert wird in ein elektrisches Messsignal umgewandelt und bevorzugt an eine Steuereinrichtung weitergeleitet, an die ein oder mehrere Sensorelemente angeschlossen sein können. In der Steuereinrichtung können die Sensorsignale verarbeitet und zur Bewertung des Betriebszustands des Riemengetriebes ausgewertet werden. Die Steuereinrichtung kann mit der Steuerung des Lenksystems oder des Kraftfahrzeugs verbunden sein. Vorteilhaft ist, dass ein oder mehrere Sensorelemente mit geringem Aufwand in den Lenkantrieb integriert sein können, und die elektronische Signalverarbeitung in vorhandenen Steuereinheiten der Lenksäule oder des Kraftfahrzeugs erfolgen kann. Verglichen mit der durch die Erfindung realisierbaren Erhöhung der Betriebssicherheit ist der Aufwand gering.

Es kann vorteilhaft sein, dass mindestens ein Betriebsparameter korreliert ist mit der Riemenspannung eines Riemens. Für einen optimalen Betrieb des Riementriebs bezüglich geringer Geräuschentwicklung, effizienter Drehmomentübertragung, geringer Reibung und dergleichen ist es wesentlich, dass die Riemenspannung möglichst gleichmäßig innerhalb eines vorgegebenen Toleranzbereichs gehalten wird. Abweichungen wie eine verringerte Riemenspannung durch Verschließ oder Schäden können zur Beeinträchtigung des Betriebs führen. Derartige Störungen verursachen spezifische Änderungen von damit korrelierten Betriebsparameters, beispielsweise können eine erhöhte Geräuschentwicklung, Vibrationen, ein Temperaturanstieg durch erhöhte Reibung und dergleichen auftreten. Diese Betriebsparameter können durch die Überwachungseinrichtung mittels geeigneter Sensorelemente gemessen werden und ermöglichen eine zuverlässige Einschätzung des Betriebszustands des Riementriebs.

Es kann vorgesehen sein, dass das Riemengetriebe eine Vorspanneinrichtung aufweist. Die Vorspanneinrichtung dient zur Erzeugung und Aufrechterhaltung einer vorgegebenen Riemenspannung in einem optimalen Betriebsbereich. Sie kann ein elastisches Vorspannelement aufweisen, welches beispielsweise einen Riementrum belastet oder die Riemenräder auseinander drängt. Vorteile der Vorspanneinrichtung sind ein optimierter Betrieb, und darüber hinaus können Einstellungen der Vorspanneinrichtung, beispielsweise eine Vorspannkraft oder ein Vorspannweg, ebenfalls als Betriebsparameterwerte zur Überwachung des Riementriebs genutzt werden.

Bevorzugt kann die Erfindung vorsehen, dass die Betriebsparameter mindestens einen Messwert umfassen, der einen Betriebsstrom und/oder einer Rotorposition des Motors und/oder eine Position eines Antriebs- und/oder Abtriebsrads und/oder eine Aktuatorposition und/oder einen Temperaturwert und/oder einen Schwingungswert (Vibration oder Akustik) und/oder einen Hysteresewert umfasst. Zur Überwachung des Riementriebs können im Prinzip einzelne oder Kombinationen von Messgrößen erfasst werden, welche direkt oder mittelbar mit einem Betriebszustand korreliert sind. Beispielsweise ist der Betriebsstrom des Motors abhängig von der Reibung und damit auch von der Riemenspannung, Schwingungen und Vibrationen können ebenfalls durch eine abweichende, zu niedrige Riemenspannung verursacht werden. Dadurch kann ein ansteigender Geräuschpegel als Betriebsparametermesswert auf einen verschlissenen oder defekten Riemen hindeuten. Eine Temperaturerhöhung kann ein Hinweis auf eine erhöhte Riemen- oder Lagerreibung sein, die langfristig eine Störung verursachen kann. Im Betrieb auftretende Abweichungen von relativen Winkel- oder Rotorpositionen der Riemenräder können Längenveränderungen des Riemens anzeigen. Es können einzelne oder Kombinationen der vorgenannten oder auch weiterer Betriebsparameter erfasst werden, wodurch in vorteilhafter Weise zuverlässige Rückschlüsse auf den Funktions- und Betriebszustand des Riementriebs ermöglicht werden. Dadurch, dass ein Hysteresewert oder zeitliche Ableitungen von Betriebsparametern erfasst werden, können potentiell schädliche Entwicklungen frühzeitig erkannt werden, so dass Sicherungsmaßnahmen wie Wartung oder Austausch von Komponenten, präventiv durchgeführt werden können, bevor eine potentiell kritische Störung eintritt.

Eine mögliche Ausführung ist, dass der Lenkantrieb ein Lenkgetriebe aufweist. Das Lenkgetriebe dient zur Umsetzung einer Rotationsbewegung eines Lenkantriebs in einen Lenkeinschlag eines oder mehrerer lenkbarer Räder. In einem Steer-by-Wire-Lenksystem wird die Lenkkraft rein motorisch durch den elektrischen Motor erzeugt. In einer Hilfskraftlenkung kann das Lenkgetriebe zusätzlich eine mechanische Verbindung mit einer manuellen Lenkhandhabe aufweisen, beispielsweise einem Lenkrad. Die Erfindung ist besonders vorteilhaft für Steer-by-Wire-Lenksysteme, bei denen ein Ausfall des Lenkantriebs durch eine Störung des Riementriebs die Lenkbarkeit des Fahrzeugs erheblich beeinträchtigt.

Ein Lenkgetriebe kann dadurch realisiert sein, dass der Spindeltrieb eine längsverschieblich gelagerte Gewindespindel aufweist, die in eine drehend antreibbare, axial abgestützte Spindelmutter eingreift. Die Gewindespindel bildet ein in einem Gehäuse, dem Getriebegehäuse, linear verlagerbares Aktuatorelement, welches über Spurstangen an Achsschenkel lenkbarer Räder angelenkt sein kann. Die Spindelmutter ist in dem Gehäuse axial abgestützt und mit dem Abtriebsrad des Spindeltriebs verbunden, so dass sie durch den Riementrieb um die Spindelachse drehend antreibbar ist, um die Gewindespindel axial linear zu verlagern. Ein derartiger Spindeltrieb kann leichtgängig, robust und zuverlässig ausgelegt werden, beispielsweise als Kugelgewindetrieb.

Ein erfindungsgemäßer Lenkantrieb für ein Steer-by-Wire-Lenksystem kann durch einen Spindeltrieb realisiert sein, so dass eine leichte und kompakte Bauweise ermöglicht ist. Für einen Einsatz als Hiflskraftantrieb einer Zahnstangenlenkung kann das Aktuatorelement, beispielsweise die besagte Gewindespindel, mit einer Zahnstange verbunden sein, die in an sich bekannter Weise in Eingriff mit einem Lenkritzel steht, welches über eine Lenkwelle mechanisch mit einem Lenkrad gekoppelt ist.

Es kann vorgesehen sein, dass eine Mehrzahl von Riemen antriebsmäßig parallel angeordnet ist. Dies kann dadurch realisiert sein, dass die Riemenräder mehrrillig ausgebildet sind, so dass mindestens zwei Riemen axial nebeneinander auf dem Umfang eines Riemenrads angeordnet sind. Zwischen den Riemenrädern verlaufen die Riementrume parallel zueinander. Ein Vorteil ist die Redundanz dieser mehrfachen Riemenanordnung ist, die sicherstellt, dass der Riementrieb auch beim Ausfall eines der Riemen funktionsfähig bleibt. Dadurch wird die Betriebssicherheit weiter erhöht.

Eine vorteilhafte Weiterbildung ist, dass zwischen benachbarten Riemen mindestens ein Leitelement angeordnet ist. Ein Leitelement kann eine Bordscheibe am Riemenrad umfassen, die radial über den Riemenrücken übersteht. Bevorzugt sind jeweils zwei Bordscheiben paarweise zu einem Riemen benachbart angeordnet. Dadurch kann ein Ab- oder Überspringen des Riemens von der Riemenscheibe wirksam verhindert werden. Weiterhin kann zusätzlich oder alternativ ein Leitelement vorgesehen sein, welches sich seitlich mit geringem Spiel parallel zu einem Riementrum erstreckt. Falls mehrere Riemen parallel angeordnet sind, ist es vorteilhaft, dass ein Leitelement zwischen benachbarten Riementrumen angeordnet ist. Ein Leitelement kann leisten-, platten- oder stegförmig ausgebildet sein, und sich zumindest zwischen den Riemenrädern erstrecken, so dass es nach außen über den Riemen vorsteht. Ein Leitelement kann gleichbedeutend auch als Leit- oder Abschirmblech bezeichnet werden. Ein oder mehrere Leitelemente können an den Riemenrädern oder in dem Gehäuse des Lenkantriebs fixiert sein. Durch ein oder mehrere Leitelemente kann ein seitliches Ausweichen oder Abspringen eines defekten Riemens, was beispielsweise bei einer Verringerung der Riemenspannung auftreten kann, wirksam verhindert werden. Bei einer mehrfachen Riemenanordnung kann auf diese Weise sichergestellt werden, dass ein defekter Riemen nicht in Kontakt mit einem benachbarten, intakten Riemen kommen kann, so dass dieser gegen Beeinträchtigungen durch einen defekten Riemen mechanisch geschützt ist. Dadurch kann die Betriebssicherheit weiter erhöht werden.

Ein oder mehrere Leitelemente können in einem den Riementrieb umgebenden Gehäuse fixiert sein. Es ist beispielsweise mit geringem Aufwand möglich, dass ein steg- oder plattenförmiges Leitblech formschlüssig in eine Nut in dem Gehäuse eingesetzt ist, und sich seitlich parallel zu einem Riemen erstreckt.

In einer Weiterbildung ist es möglich, dass ein Leitelement mit der Überwachungseinrichtung zusammenwirken kann, also einen Teil einer Überwachungssensorik darstellt. Im Normalbetreib liegt kein mechanischer Kontakt zwischen Riemen und Leitelement vor. Bei einem Defekt eines Riemens durch Deformation oder Positionsabweichung kann dieser jedoch in mechanischen Kontakt mit einem Leitelement kommen. Dadurch können Vibrationen angeregt werden, und durch erhöhte Reibung zwischen Riemen und Leitelement kann eine Erwärmung auftreten. Eine dadurch ausgelöste Geräuschentwicklung und/oder Vibration und/oder eine erhöhte Temperatur kann als Betriebsparameterwert von der Überwachungseinrichtung detektiert werden, und als Indikator für eine potentielle oder bereits eingetretene Betreibsstörung genutzt werden. Somit kann ein Leitelement eine vorteilhafte Doppelfunktion als mechanisches Sicherungselement und als funktionaler Bestandteil einer erfindungsgemäßen Überwachungseinrichtung erfüllen.

Es ist möglich, dass die Riemen unterschiedlich ausgebildet sind. Auf diese Weise können unterschiedliche Betriebseigenschaften in vorteilhafter Weise kombiniert werden, beispielsweise durch unterschiedliche Abmessungen, Materialien und/oder Ausführungen, beispielsweise als Flach-, Keil- oder Zahnriemen oder dergleichen. Dadurch können Laufeigenschaften, Lebensdauer und/oder Notlaufeingeschaften des Riemengetriebes in vorteilhafter Weise optimiert und erweitert werden.

Bei einem Verfahren zum Betrieb eines erfindungsgemäßen Lenkantriebs gemäß einer der vorangehenden Ausführungen ist erfindungsgemäß vorgesehen, dass von einer Überwachungseinrichtung mit dem Riementrieb korrelierte Betriebsparameter während des Betriebs fortlaufend erfasst und mit vorgegebenen Referenzwerten verglichen werden, und falls eine Abweichung eines erfassten Betriebsparameters von einem Referenzwert auftritt, ein Notfallbetrieb aktiviert wird.

Durch die erfindungsgemäße Überwachungseinrichtung werden im Betrieb durchgehend, mittels kontinuierlicher oder diskreter Messungen, Betriebsparameterwerte erfasst, welche für den Betriebszustand des Riemengetriebes repräsentativ sind, wie oben im Zusammenhang mit dem erfindungsgemäßen Lenkantrieb beschrieben ist. Falls eine relevante Abweichung festgestellt wird, welche mit einer bereits eingetretenen oder wahrscheinlich eintretenden Störung korreliert ist, kann automatisiert ein Notfallbetrieb oder ein Notfallprogramm ausgelöst werden. Ein Notfallbetrieb kann beispielsweise bei einer geringfügigen Störung die Ausgabe eines Warnsignals umfassen, die anzeigt, dass eine Überprüfung vorgenommen werden sollte. Bei einer potentiell gravierenden Störung, durch welche die Lenkfähigkeit beeinträchtigt werden könnte, sind automatisierte Eingriffe in den Fahrbetrieb denkbar und möglich, um eine Gefahrensituation bereits im Vorfeld abzuwenden. Beispielsweise kann die mögliche Höchstgeschwindigkeit des Fahrzeugs begrenzt werden, und zusätzlich oder alternativ eine kontrollierte Abbremsung des Fahrzeugs eingeleitet werden. Auf diese Weise kann das Sicherheitsniveau erhöht werden, insbesondere bei Steer-by-Wire-Lenksystemen und im autonomen Fahrbetrieb.

Bei einem Lenksystem für ein Kraftfahrzeug, umfassend zumindest eine Lenkeingabeeinrichtung und einen Lenkantrieb, welcher einen über ein Riemengetriebe mit einem Aktuatorelement wirkverbundenen elektrischen Motor aufweist, wobei das Riemengetriebe mindestens einen um ein Antriebsrad und ein Abtriebsrad umlaufenden Riemen aufweist, ist erfindungsgemäß vorgesehen, dass der Lenkantrieb gemäß einer der vorangehend beschriebenen Ausführungen ausgebildet ist, oder Kombinationen der beschriebenen Merkmale aufweist. Dadurch können die im Zusammenhang mit dem Lenkantrieb genannten Vorteile im Hinblick auf eine höhere Betriebssicherheit realisiert werden.

Das Lenksystem kann bevorzugt als Steer-by-Wire-Lenksystem ausgebildet sein, welches eine Lenkeingabeeinrichtung aufweist, die manuelle Lenkbefehle ausschließlich als elektrische Steuersignale zur Steuerung des motorischen Lenkantriebs abgibt, und die keine direkte mechanische Verbindung mit den zu lenkenden Rädern aufweist.

Es ist ebenfalls denkbar und möglich, dass ein erfindungsgemäßer Lenkantrieb als Hilfskraftantrieb eingesetzt wird, bei dem eine manuelle Lenkhandhabe zusätzlich mechanisch mit zu lenkenden Rädern gekoppelt ist.

Die erfindungsgemäße Überwachungseinrichtung kann bevorzugt in eine elektronische Steuereinheit des Lenksystems integriert sein, die ihrerseits mit dem Kommunikationsnetz des Fahrzeugs verbunden ist.

Bei einem Verfahren zum Betrieb eines Lenksystems, umfassend einen Lenkantrieb, der einen Riementrieb aufweist, ist erfindungsgemäß vorgesehen, dass mit dem Riementrieb korrelierte Betriebsparameter während des Betriebs fortlaufend erfasst und mit vorgegebenen Referenzwerten verglichen werden, und falls eine Abweichung eines erfassten Betriebsparameters von einem Referenzwert auftritt, ein Notfallbetrieb aktiviert wird.

Wie bereits oben im Zusammenhang mit dem erfindungsgemäßen Lenkantrieb erläutert, kann durch die Überwachungseinrichtung bei einer Störung des Riementriebs bevorzugt automatisiert einen Notfallbetrieb oder ein Notfallprogramm ausgelöst werden. Dieses Notfallprogramm kann abhängig von der Bewertung der Störung die Ausgabe eines Warnsignals umfassen, und zusätzlich oder alternativ eine Betriebsbeeinflussung des Lenksystems und/oder des Kraftfahrzeugs, um potentiell kritische Fahrsituationen sicher vermeiden zu können.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Teilansicht eines erfindungsgemäßen Lenksystems,
- Figur 2: den Lenkantrieb des Lenksystems gemäß Figur 1 in einer vergrößerten Darstellung,
- Figur 3: einen Riementrieb des Lenkantriebs gemäß Figur 2 in einer schematisch freigestellten perspektivischen Darstellung,
- Figur 4: eine weitere perspektivische Darstellung des Riementriebs gemäß Figur 3,
- Figur 5: das Gehäuse des Lenkantriebs gemäß Figur 2 separat in einer schematischen perspektivischen Ansicht.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

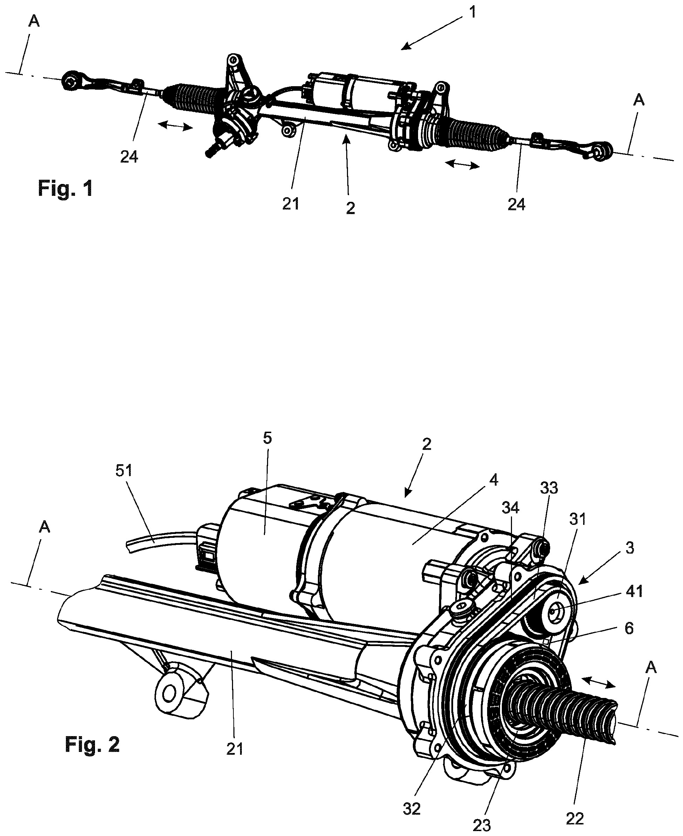

Fig. 1 zeigt ein erfindungsgemäßes Lenksystem 1 in einer perspektivischen Ansicht. Es umfasst einen erfindungsgemäßen Lenkantrieb 2, der als Lenkgetriebe ausgebildet ist und ein in Richtung einer Achse A langgestrecktes Gehäuse 21 aufweist.

Figur 2 zeigt in einer vergrößerten Ansicht den Lenkantrieb 2, wobei das Gehäuse 21 teilweise weggelassen ist und einen Blick auf einen erfindungsgemäßen Riementrieb 3 freigibt.

In dem Gehäuse 21 ist eine Gewindespindel 22 in Richtung der Achse A, die identisch mit der Spindelachse ist, längsverschiebbar gelagert, wie in Figur 2 mit dem Doppelpfeil angedeutet ist. Die Gewindespindel 22 greift in eine Spindelmutter 23 ein, welche in dem Gehäuse 21 drehbar gelagert und axial, in Richtung der Achse A, abgestützt ist. Dadurch wird ein Spindeltrieb gebildet, der durch drehenden Antrieb der Spindelmutter 23 eine axiale lineare Verlagerung der Gewindespindel 22 ermöglicht.

Die Gewindespindel 22 ist mit Spurstangen 24 verbunden, die axial beiderseits aus dem Gehäuse 21 herausgeführt sind, und die an ihren freien Endbereichen an Achsschenkel von hier nicht dargestellten, lenkbaren Rädern eines Fahrzeugs angelenkt sind.

Der Lenkantrieb 2 umfasst einen elektrischen Motor 4 mit einer drehend antreibbaren Motorwelle 41, der bevorzugt am Gehäuse 21 angebracht sein kann.

Der Motor 4 ist an eine elektrische Steuereinheit 5 des Lenkantriebs 2 angeschlossen, die über eine elektrische Leitung 51 mit einem nicht dargestellten elektrischen Kommunikationsund Versorgungsnetz eines Kraftfahrzeugs verbunden ist. Die Steuereinheit 5 ermöglicht die elektrische Ansteuerung des Motors 4 in Abhängigkeit von elektrischen Lenk-Steuersignalen eines Steer-by-Wire-Lenksytems, die über die Leitung 51 übermittelt werden. Über den Riementrieb 3 kann entsprechend ein drehender Antrieb der Spindelmutter 23 erfolgen, wodurch eine lineare Verlagerung der Gewindespindel 22 und dadurch ein Lenkeinschlag der gelenkten Räder erzeugt wird.

Der Riementrieb 3 umfasst ein erstes, kleineres Riemenrad 31, welches ein Antriebsrad bildet und drehfest auf der Motorwelle 41 befestigt ist. Ein zweites, größeres Riemenrad 32 ist als Abtriebsrad mit der Spindelmutter 23 drehfest verbunden. Als Zugmittel des Riementriebs 3 laufen zwei Riemen 33 und 34 um die Riemenräder 31 und 32 um. Die Riemenräder 31 und 32 sind entsprechend zweirillig ausgebildet.

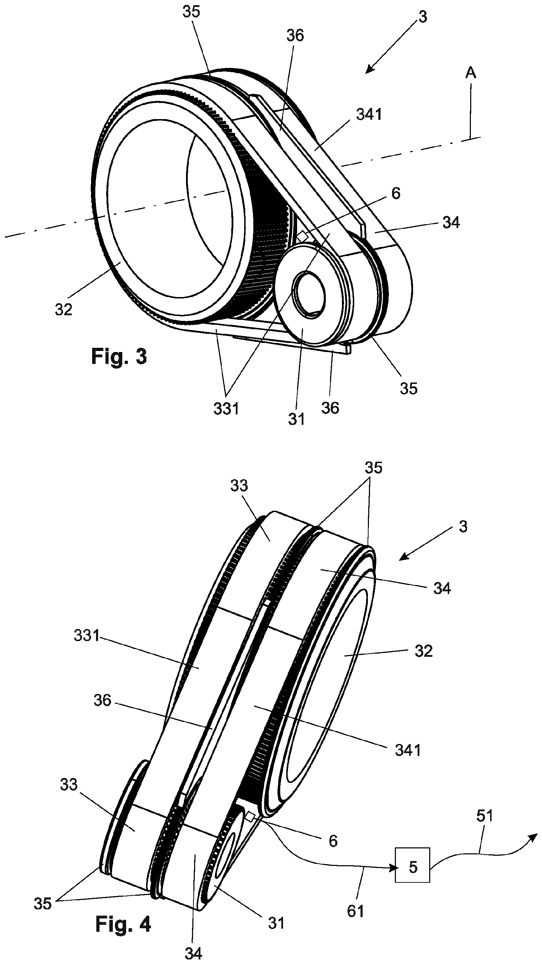

Der Riementrieb 3 ist in zwei verschiedenen perspektivischen Ansichten in einer separaten, schematisch freigestellten Darstellung in den Figuren 3 und 4 gezeigt.

Die Riemenräder 31 und 32 weisen umlaufende, radial nach außen über die Riemen 33, 34 vorstehende Bordscheiben 35 auf, welche als Leitelemente ausgebildet sein können. Diese verhindern ein Wandern der Riemen 33, 34 quer zur Laufrichtung. Wie insbesondere in Figur 4 gut erkennbar ist, sind die Bordscheiben 35 zwischen den Riemen 33 und 34 angeordnet. Dadurch kann wirksam verhindert werden, dass die Riemen 33, 34 einander berühren und den Lauf stören, auch wenn die Riemenspannung eines der Riemen 33, 34 verringert ist, beispielsweise durch Verschleiß.

Weitere Bordscheiben 35 können axial außen an den Riemenrädern 31 und 32 angeordnet sein, beispielsweise an den einander abgewandten Axialseiten der Riemenräder 31 und 32.

Platten- oder leistenförmige Leitelemente 36, die auch als Leit- oder Abschirmbleche bezeichnet werden können, sind zwischen den beiden Riemen 33, 34 angeordnet, und zwar in dem Bereich der freiliegenden Riementrume 331 und 341, welche die nicht an den Riemenrädern anliegenden Riemenabschnitte bezeichnen, die sich zwischen den in Figur 3 und 4 angedeuteten Querlinien erstrecken.

Im Normalbetrieb haben die Riemen 33, 34 Abstand zu den Leitelementen 36, berühren diese also nicht.

Die erfindungsgemäße Überwachungseinrichtung umfasst ein Sensorelement 6, welches bevorzugt im Bereich des Riementriebs 3 angeordnet sein kann, wie in den Figuren 2, 3 und 4 schematisch dargestellt ist.

Das Sensorelement 6 kann beispielsweise einen Vibrations- und/oder Schall- und/oder Temperatursensor aufweisen, und ist mit einer Signalleitung 61 an eine Steuereinheit angeschlossen, beispielweise die Steuereinheit 5 des Lenkantriebs 2.

Das Sensorelement 6 kann beispielsweise eine Schallemission der Riemen 33, 34 als Betriebsparameterwert messen und als Messsignal an die Steuereinheit 5 übermitteln, wobei bevorzugt für jeden der Riemen 33, 34 ein eigener Messwert zugeordnet werden kann. In der Steuereinheit 5 kann automatisiert ein Vergleich mit vorgegebenen Referenzwerten erfolgen. Wird dabei eine Abweichung über ein vorgegebenes Maß festgestellt, beispielsweise durch erhöhte Vibrationen oder Geräuschemission, kann dies auf eine Störung hindeuten, beispielsweise auf eine mangelhafte Riemenspannung. In diesem Fall kann von der Steuereinheit 5 über die Leitung 51 ein Warn- und/oder Steuersignal abgegeben werden, um die Störung anzuzeigen, oder automatisiert einen Notfallbetrieb des Fahrzeugs zu aktivieren, in dem beispielsweise die maximale Fahrgeschwindigkeit begrenzt wird.

Das Sensorelement 6 kann zusätzlich oder alternativ andere oder weitere Messungen ermöglichen, um beispielsweise eine Temperaturerhöhung durch erhöhte Reibung des oder der Riemen 33, 34 zu detektieren, die ebenfalls auf eine Störung hindeuten kann.

Es ist auch denkbar und möglich, den Motorstrom des Motors als Betriebsparameter zu erfassen und zu überwachen, oder eine relative Position der Riemenräder 31, 32. Dazu können jeweils geeignete, angepasste Sensorelemente 6 eingesetzt werden.

Ein Sensorelement 6 kann auch an andren Positionen an dem Gehäuse 21 angebracht sein.

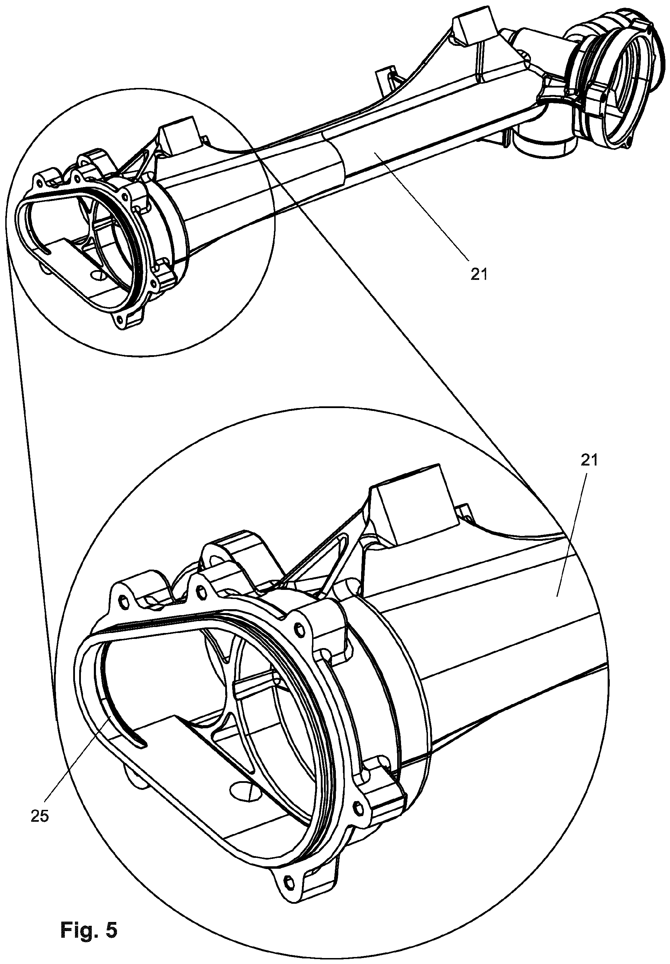

Figur 5 zeigt das Sensorgehäuse 21 in einer separaten Darstellung. In dem Bereich, in dem der Riementrieb 3 montiert wird, können innen Nuten 25 vorgesehen sein, welche eine positionsgenaue, formschlüssige Befestigung der Leitelemente 36 ermöglichen.

In dem dargestellten Beispiel sind die beiden Riemen 33, 34 als Zahnriemen dargestellt. Davon abweichend können sie auch untereinander unterschiedlich ausgebildet sein, und beispielsweise Flach- und/oder Keilriemen und/oder anders ausgebildete Zugmittel umfassen. Es ist auch möglich, dass die Riemen 33, 34 unterschiedliche Materialien aufweisen, und/oder unterschiedliche Abmessungen haben können.

### Bezugszeichenliste

- 1: Lenksystem
- 2: Lenkantrieb
- 21: Gehäuse
- 22: Gewindespindel
- 23: Spindelmutter
- 24: Spurstange
- 25: Nut
- 3: Riementrieb
- 31: Riemenrad (Antriebsrad)
- 32: Riemenrad (Abtriebsrad)
- 33, 34: Riemen
- 331: Riementrum
- 341: Riementrum
- 35: Bordscheibe
- 36: Leitelement
- 4: Motor
- 41: Motorwelle
- 5: Steuereinheit
- 51: Leitung
- 6: Sensorelement
- 61: Signalleitung

- A: Achse

## Patentansprüche

1. Lenkantrieb (2) für ein Lenksystem (1) eines Kraftfahrzeugs, welcher einen über ein Riemengetriebe (3) mit einem Aktuatorelement (22) wirkverbundenen elektrischen Motor (4) aufweist, wobei das Riemengetriebe (3) mindestens einen um ein Antriebsrad (31) und ein Abtriebsrad (32) umlaufenden Riemen (33, 34) aufweist,
**dadurch gekennzeichnet,**
**dass** eine Überwachungseinrichtung (6, 5) zur Erfassung von Betriebsparametern des Riemengetriebes (3) vorgesehen ist.

2. Lenkantrieb nach Anspruch 1, **dadurch gekennzeichnet, dass** die Überwachungseinrichtung (5, 6) eine Vergleichseinheit aufweist, die ausgebildet ist zum Vergleich mindestens eines erfassten Betriebsparameters mit einem vorgegebenen Referenzwert.

3. Lenkantrieb nach einem der vorangehenden Ansprüche, **dadurch gekennzeichnet, dass** die Überwachungseinrichtung ein elektrisches Sensorelement (6) aufweist.

4. Lenkantrieb nach einem der vorangehenden Ansprüche, **dadurch gekennzeichnet, dass** mindestens ein Betriebsparameter korreliert ist mit der Riemenspannung eines Riemens (33, 34).

5. Lenkantrieb nach einem der vorangehenden Ansprüche, **dadurch gekennzeichnet, dass** das Riemengetriebe (3) eine Vorspanneinrichtung aufweist.

6. Lenkantrieb nach einem der vorangehenden Ansprüche, **dadurch gekennzeichnet, dass** die Betriebsparameter mindestens einen Messwert umfassen, der einen Betriebsstrom und/oder einer Rotorposition des Motors und/oder eine Position eines Antriebs- und/oder Abtriebsrads und/oder eine Aktuatorposition und/oder einen Temperaturwert und/oder einen Schwingungswert und/oder einen Hysteresewert umfasst.

7. Lenkantrieb nach einem der vorangehenden Ansprüche, **dadurch gekennzeichnet, dass** der Lenkantrieb (2) ein Lenkgetriebe aufweist.

8. Lenkantrieb nach einem der vorangehenden Ansprüche, **dadurch gekennzeichnet, dass** der Spindeltrieb eine längsverschiebbar gelagerte Gewindespindel (22) aufweist, die in eine drehend antreibbare, axial abgestützte Spindelmutter (23) eingreift.

9. Lenkantrieb nach einem der vorangehenden Ansprüche, **dadurch gekennzeichnet, dass** eine Mehrzahl von Riemen (33, 34) antriebsmäßig parallel angeordnet ist.

10. Lenkantrieb nach einem der vorangehenden Ansprüche, **dadurch gekennzeichnet, dass** zwischen benachbarten Riemen (33, 34) mindestens ein Leitelement (35, 36) angeordnet ist.

11. Lenkantrieb nach Anspruch 10, **dadurch gekennzeichnet, dass** die Riemen (33, 34) unterschiedlich ausgebildet sind.

12. Verfahren zum Betrieb eines Lenkantriebs (2) nach einem der vorangehenden Ansprüche,
**dadurch gekennzeichnet,**
**dass** von einer Überwachungseinrichtung (6) mit dem Riementrieb (3) korrelierte Betriebsparameter während des Betriebs fortlaufend erfasst und mit vorgegebenen Referenzwerten verglichen werden, und falls eine Abweichung eines erfassen Betriebsparameters von einem Referenzwert auftritt, ein Notfallbetrieb aktiviert wird.

13. Lenksystem für ein Kraftfahrzeug, umfassend einen Lenkantrieb (2), welcher einen über ein Riemengetriebe (3) mit einem Aktuatorelement (22) wirkverbundenen elektrischen Motor (4) aufweist, wobei das Riemengetriebe (3) mindestens einen um ein Antriebsrad (33) und ein Abtriebsrad (34) umlaufenden Riemen (33, 34) aufweist, **dadurch gekennzeichnet,**
**dass** der Lenkantrieb (2) ausgebildet ist nach einem der vorangehenden Ansprüche 1 bis 11.

14. Lenksystem nach Anspruch 13, **dadurch gekennzeichnet, dass** das Lenksystem (1) als Steer-by-Wire-Lenksystem ausgebildet ist oder einen Hilfskraftantrieb aufweist.

15. Verfahren zum Betrieb eines Lenksystems (1), umfassend einen Lenkantrieb (2), der einen Riementrieb (3) aufweist,
**dadurch gekennzeichnet,**
**dass** mit dem Riementrieb (3) korrelierte Betriebsparameter während des Betriebs fortlaufend erfasst und mit vorgegebenen Referenzwerten verglichen werden, und falls eine Abweichung eines erfassten Betriebsparameters von einem Referenzwert auftritt, ein Notfallbetrieb aktiviert wird.
